# EUROPÄISCHE PATENTANMELDUNG

(11) **EP 0 887 007 A1**
(43) Veröffentlichungstag der Anmeldung: **30.12.1998**
(21) Anmeldenummer: 98109335.4
(22) Anmeldetag: 22.05.1998
(51) Int. Cl.: A01D 34/86, A01D 57/20

(54) **Böschungsmäher**

(30) Priorität: 26.06.1997 CH 1546/97
(71) Anmelder: Müller Gleisbau AG, 8500 Frauenfeld (CH)
(72) Erfinder: Müller, René, 8512 Thundorf (CH)
(74) Vertreter: Frei, Alexandra Sarah

(57) **Zusammenfassung**

Die Erfindung betrifft einen Böschungsmäher zum Schneiden von und ein Verfahren zum Beseitigen des Schnittgutes aus dem Böschungsbereich, wobei der Böschungsmäher ein strömungsoptimiertes Gehäuse 2 mit einem Diffusor, eine modulare Einfördereinrichtung 30 und eine mechanische Wurfvorrichtung 4 enthält, welche das Schnittgut aus dem Schnittgutstrom abscheidet und in einen vorbestimmten Bereich verlagert.

## Beschreibung

Die vorliegende Erfindung betrifft ein Verfahren zum Mähen einer Böschung und einen Böschungsmäher zur Durchführung des Verfahrens gemäss den Patentansprüchen 1 und 9.

Eisenbahnlinien werden entlang einer beträchtlichen Länge durch Böschungen gesäumt. Diese, meist mit Gras bewachsen, bedürfen einer effizienten und kostengünstigen Bearbeitung. Das Schnittgut kann aber nicht unmittelbar im unteren Böschungsbereich belassen werden, da es sich sonst mit der Zeit ansammelt und durch Luftbewegungen in den Trassebereich (Gehweg) respektive auf die Fahrbahn gelangen kann. Aus diesem Grund werden heute Böschungsmäher eingesetzt, welche mit einem Gebläse, einem Röhrensystem und einem Sammelwagen ausgestattet sind. Das Schnittgut wird dabei durch das Gebläse aus dem Böschungsmähkopf abgesaugt und über das Röhrensystem in einem Sammelbehälter geleitet. Diese Anordnungen sind konstruktiv aufwendig, schwer und werden aus diesem Grund auf einem Bahnwagon montiert. Das eingesammelte Schnittgut muss zusätzlich entsorgt werden, was hohe Kosten mit sich bringt.

Bei aus dem Stand der Technik bekannten Anordnungen wird der Böschungsmähkopf an einem mehrgelenkigen, hydraulisch bewegten Roboterarm mit einer Länge von bis zu acht Metern befestigt, welcher auf einem gleisgängigen Fahrzeug montiert ist. Aufgrund des angebauten Gebläses und des Röhrensystems weisen die herkömmlichen Konstruktionen Gewichte von mehreren hundert Kilogramm auf, welche sich im Bereich des Mähkopfes konzentrieren. Diese Gewichte bieten aber Probleme, da sie besonders bei voll ausgestrecktem Roboterarm grosse Momente erzeugen und dadurch kleinere gleisgängige Fahrzeuge zum Kippen bringen können oder ein Radpaar so weit entlasten, dass der elektrische Kontakt zwischen den beiden Gleissträngen, welcher für die Signalgebung unerlässlich ist, nicht mehr gewährleistet wird.

Solche aus dem Stand der Technik bekannten Maschinen weisen die Nachteile auf, dass sie zu aufwendig, gross, schwer und teuer sind und nur auf Gleisen bewegt werden können.

Die Aufgabe der vorliegenden Erfindung besteht nun darin, einen leichten, konstruktiv einfachen und in Betrieb und Herstellung günstigen Böschungsmähkopf zu realisieren. Dabei wird auf die aufwendige und teure Technik der, aus dem Stand der Technik bekannten, Konstruktionen verzichtet. Der erfindungsgemässe Böschungsmähkopf soll dabei so leicht sein, dass er an einem leichten gleisgängigen Fahrzeug, z.B. einem gleisgängigen Traktor, eingesetzt werden kann.

Diese Aufgabe wird durch die in den Patentansprüchen offenbarte Erfindung gelöst.

Die Erfindung beruht auf dem gezielten Zusammenwirken von einem Messerrad, wie aus einem herkömmlichen Böschungsmäher bekannt, einem für den Luftstrom optimal ausgeformten Gehäuse und einer leichtgewichtigen, mechanischen Wurfvorrichtung.

Bis anhin wurde, besonders beim Unterhalt von Böschungen entlang von Bahnlinien, das Schnittgut mittels aufwendigen Röhren eingesaugt und entsorgt. Entgegen der allgemeinen Annahme, ist es aber nicht zwingend erforderlich das Schnittgut einzusammeln, da ein Ablagern ausserhalb des untersten Böschungsbereichs ebenfalls genügt, ja sogar erwünscht ist (Humusbildung), und somit ein aufwendiges und teures Aufsammeln und Deponieren umgangen werden kann. Bei den aus dem Stand der Technik bekannten Systemen ist es aufgrund der starken Luftströmungen nicht möglich das Schnittgut gezielt zu deponieren. Die hier vorgestellte Erfindung ermöglicht hingegen erstmals ein gezieltes Positionieren des Schnittgutes.

Das Gehäuse des Böschungsmähkopfes ist dabei so ausgebildet, dass das Schnittgut durch die ausgewogene Führung der Luftströmung im Innern des Böschungsmähkopfes gezielt in den Wirkbereich der mechanischen Wurfvorrichtung gelenkt wird. Diese konzentriert und beschleunigt das Schnittgut zu einem Materialstrom, welcher anschliessend auf einer kontrollierten Bahn in den gewünschten Bereich verlagert wird.

Herkömmliche Lösungen mit Gebläsen zeichnen sich dadurch aus, dass das Schnittgut in einem stark turbulenten, schnell fliessenden Luftstrom enthalten ist. Um den wesentlichen Punkt des gezielten Positionierens besser verstehen zu können, kann folgender bildlicher Vergleich angeführt werden: Ein Wasserstrahl aus einem Gartenschlauch bleibt während seiner ganzen Flugbahn kompakt beisammen und kann sehr genau positioniert werden. Ein Luftstrom hingegen, beispielsweise aus einem Haartrockner, hat nur eine geringe Reichweite und weist starke Turbulenzen auf. Würde er Partikel enthalten, könnten diese unmöglich gezielt positioniert werden. Dieser Umstand verunmöglicht bei herkömmlichen Anordnungen ein gezieltes Ablegen. Beim Einsatz einer mechanischen Wurfvorrichtung, welche den übermässigen Luftanteil abscheidet und den Materialstrom konzentriert, ist die Fluggeschwindigkeit des Schnittgutes ähnlich einem Wasserstrahl definiert und stellt keine Gefahr für die Umwelt dar.

Bei der hier offenbarten Erfindung ist besonders die Art und Weise wie das Schnittgut gehandhabt wird wesentlich. Insbesondere wird vorgesehen, dass nur eine minimal erforderliche Luftmenge das Schnittgut begleitet, denn nur so kann ein kompakter, gebündelter, Material-strom erreicht werden, welcher sich gezielt positionieren lässt.

Dank der äusserst effizienten Anordnung kann die bis anhin nur mit grossen und übermässig teuren Zugskompositionen gelöste Aufgabe mit einem kleinen günstigen Gerät gelöst werden. Ausserdem braucht das Schnittgut nichtmehr gesondert abgeführt zu werden. Vorteilhafterweise kann nun der neuartige Böschungsmähkopf aufgrund seiner Leichtigkeit auch an einem gleisgängigen Traktor befestigt werden, welcher ausserdem den Vorteil bietet, dass er sich auf normalen Strassen fortbewegen kann.

In einem herkömmlichen Saugmäher werden die Schneidmesser von vornherein so montiert, dass ein möglichst grosser Luftstrom erzeugt wird, welcher das Absaugen des Schnittgutes unterstützt. Diese Anordnung der Schneidmesser wirkt sich aber insofern negativ aus, indem nämlich eine sehr stark turbulente Luftströmung im Innern des Böschungsmäherkopfes entsteht, welche bewirkt, dass das windelastische Gras den Messern ausweicht und nicht optimal bearbeitet werden kann. Bei der hier offenbarten Erfindung sollen die Messer so montiert werden, dass nur eine minimal erforderliche Luftströmung im Innern des Gehäuses entsteht. Das Gehäuse soll ausserdem so ausgebildet sein, dass sich im Innern infolge der rotierenden Messer ein gewisser Unterdruck ausbildet, welcher die zu bearbeitenden Grashalme ansaugt und dadurch so aufstellt, dass sie durch die Schneidmesser optimal abrasiert werden können. Dieser Effekt wird unter anderem dadurch erreicht, indem die Ansaugöffnung in Fahrtrichtung gesehen nach schräg unten und vorne gerichtet ist. Das Gehäuse und die Messer sind dabei aerodynamisch dahingehend optimiert, dass die Strömungsverhältnisse im Innern des Gehäuses relativ ruhig sind, obschon sich die Messer mit grosser Umfangsgeschwindigkeit drehen.

Die Auslassöffnung für das Schnittgut mündet erfindungsgemäss auf eine leichtgewichtige, mechanische Wurfvorrichtung, welche das Schnittgut aus dem Böschungsbereich befördert. Als Wurfvorrichtung eignen sich beispielsweise einfache Förderbänder, deren Geschwindigkeit beliebig eingestellt werden kann. Der Schnittgutstrom wird dabei so auf das Förderband gelenkt, dass das Schnittgut infolge seiner Trägheit auf die Oberfläche des Förderbandes abgegeben wird und die mitgeführte Luft entweicht.

Die Erfindung ermöglicht somit ein einfaches Bearbeiten von Böschungen, ohne den Einsatz von sehr grossen und schweren Maschinen, welche ausserdem sehr teuer sind. Aufgrund seines geringen Gewichtes kann der neuartige Böschungsmäher beispielweise an einem schienengängigen Traktor befestigt werden, welcher im Bereich des Gleisbaus als leichtes Fahrzeug gilt und ausserdem den Vorteil bietet, dass er sich auch auf der Strasse bewegen kann.

Ein Ausführungsbeispiel wird anhand der folgenden Figuren näher erläutert.

Es zeigen:
- Fig.1: einen Böschungmäher in einer perspektivischen Darstellung schräg von hinten
- Fig.2: einen aufgeschnittenen Böschungsmäher
- Fig.3: einen Böschungsmäher schräg von links hinten
- Fig.4: einen Böschungsmäher schräg von unten
- Fig.5: einen aufgeschnittenen Böschungsmäher von rechts
- Fig.6: einen aufgeschnittenen Böschungsmäher von rechts mit Einfördereinrichtung.

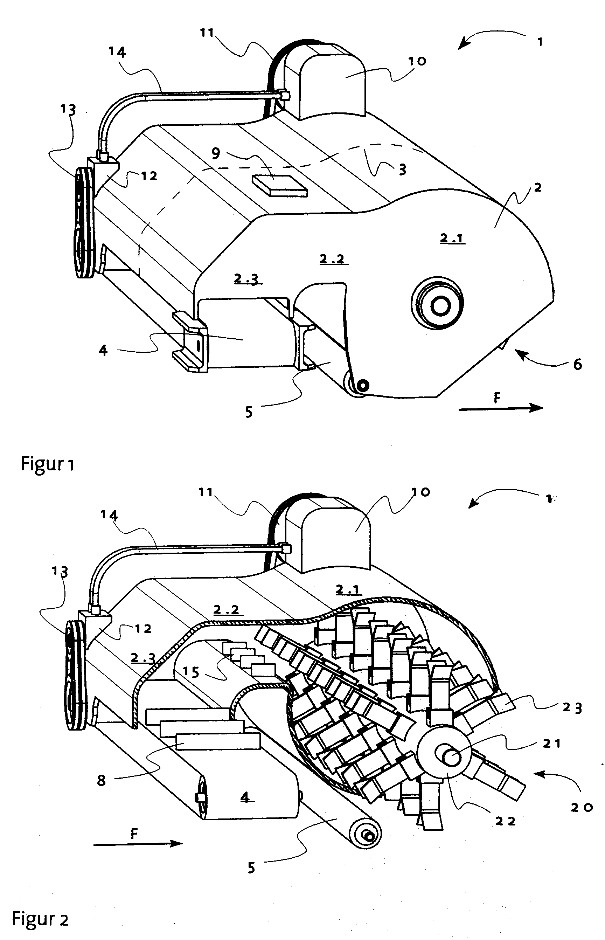

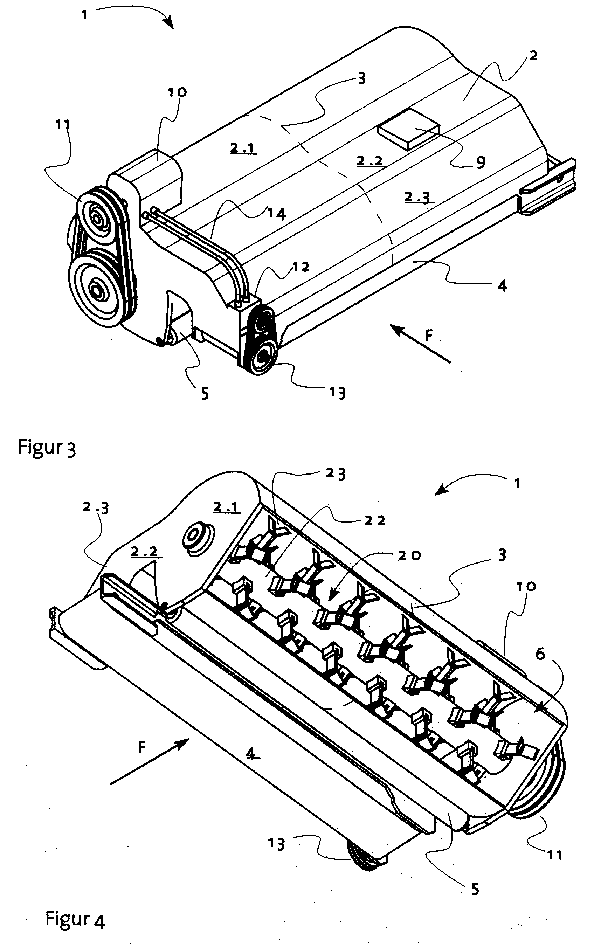

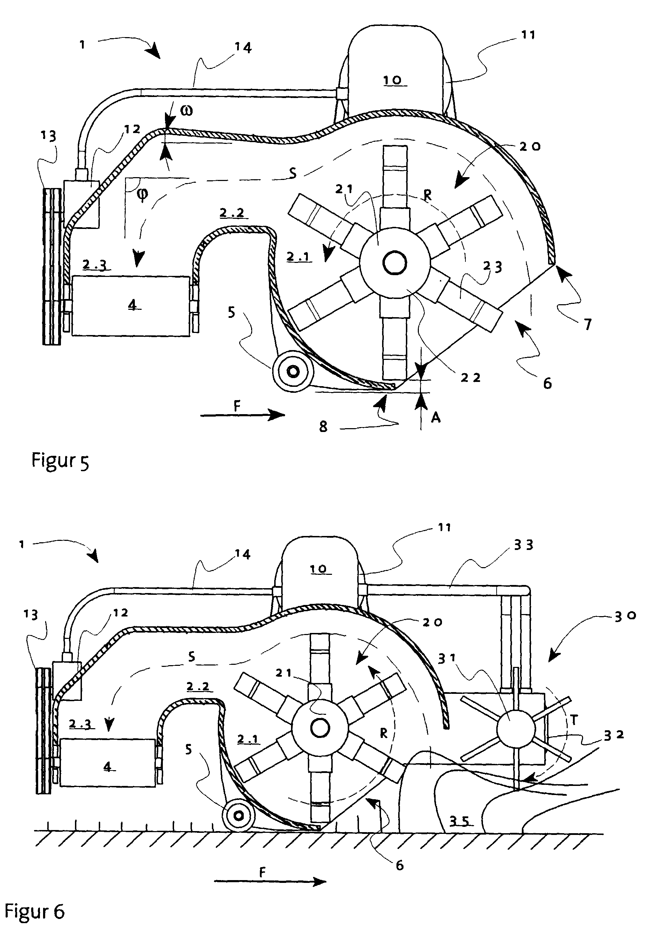

Figur 1 zeigt einen Böschungsmähkopf 1 in einer schematischen Darstellung. Die Fahrtrichtung ist durch den Pfeil F gekennzeichnet. Zu erkennen sind ein Gehäuse 2, vorzugsweise aus Metallblech hergestellt. Entlang einer gestrichelten Linie 3, wird das Gehäuse 2 in Figur 3 schematisch geschnitten. Eine Wurfvorrichtung, vorzugsweise als Förderband 4 ausgestaltet, ist am nachlaufenden Ende des Böschungsmähkopfes 1 quer zur Fahrtrichtung angebracht. Eine Führungsrolle 5 garantiert einen definierten Abstand A (vgl. Figur 5) des Söschungsmähkopfes 1 zum Untergrund. Sie ist quer zur Fahrtrichtung und vorteilhafterweise verstellbar angeordnet, so dass der Abstand zum Untergrund angepasst werden kann.

Der Antrieb des Böschungsmähkopfes erfolgt über einen Hydraulikmotor 10, welcher über ein Keilriemengetriebe 11 auf ein Messerrad 20 (vgl. Figur 2) wirkt. Das Förderband 4 wird hier ebenfalls über ein Hydraulikmotor 12, welcher mit einem Keilriemengetriebe 13 gekoppelt ist, angetrieben. Der Hydraulikmotor 12 wird über Hydraulikschläuche 14 mit Öl versorgt. Das gesamte Hydrauliköl für den Antrieb des Böschungsmähkopfes stammt aus dem Hydrauliksystem des Schienenfahrzeuges, an welchem der Böschungsmähkopf befestigt ist. Die Zuleitungen sind nicht näher dargestellt.

Der Böschungsmähkopf 1 wird an einem Roboterarm eines gleisgängigen Fahrzeugs, mittels eines Flansches g befestigt. Der Flansch 9 ist so am Gehäuse befestigt, dass die Reichweite möglichst optimal ausgenutzt werden kann.

Figur 2 zeigt den Böschungsmähkopf 1 in einer aufgeschnittenen Darstellung. Der in Fahrtrichtung gesehen rechte Teil des Gehäuses ist dabei entfernt. Im Innern ist das Messerrad 20, bestehend aus einer Achse 21, einem Messerhalter 22 und einer bestimmten Anzahl Messern 23 dargestellt. Die Anzahl der Messer wird so gewählt, dass eine genügende Überdeckung des Untergrundes gewährleistet ist.

Das Gehäuse 2 besteht aus einem annähernd zylindrischen Rotorgehäuse 2.1, einem horizontalen Kanal 2.2 und einem annähernd vertikalen Kanal 2.3. Das Rotorgehäuse 2.1 ummantelt das Messerrad 20 und weist entlang seiner ganzen Breite eine nach schräg vorne und unten geneigte Einlassöffnung 6 (vgl. Figur 1, 4, 5) auf. Der zylindrische Teil des Gehäuses 2.1 umschliesst das Messerrad 20 nicht exakt konzentrisch, sondern so dass auf der Oberseite zwischen einer oberen Kante 7 der Einlassöffnung 6 und der Oberseite des horizontal verlaufenden Kanals 2.2 ein grösserer Spalt zwischen dem Messerrad 20 und dem Gehäuseteil 2.1 gebildet wird als auf der Unterseite (vgl. Figur 5). Auf der Unterseite umschliesst das Gehäuse das Messerrad so, dass nur ein sehr geringer Spalt ausgebildet wird.

Der Schnittgutstrom wird so auf der Oberseite zwischen der oberen Kante 7 der Einlassöffnung 6 und dem Beginn des horizontal verlaufenden Kanals 2.2 durch die Messer 23 entlang dem ersten Teil einer Linie S beschleunigt. Aus diesem Grund wird in diesem Bereich eine, infolge der schnell rotierenden Messer, turbulente Strömung ausgebildet, welche Luft aus der Einlassöffnung 6 nachzieht und nach dem Beschleunigen in den horizontal verlaufenden Kanal 2.2 ausstösst. Der Druck in der Einlassöffnung ist als Konsequenz davon negativ und wechselt mit positivem Druckgradient in einen Überdruck mit Maximum im Bereich wo die Strömung in den horizontalen Kanal 2.2 eintritt.

Durch den Übergang in den horizontalen Kanal 2.2 wird der durch die Messer verwirbelte Schnittgutstrom, bestehend aus einem Luftstrom und dem Schnittgut, entlang dem zweiten Teil des Weges S ausgerichtet, kanalisiert und was einen negativen Druckgradienten bedingt.

Der horizontal verlaufende Kanal 2.2 dient der Führung des Schnittgutstromes entlang der Linie S und ist so ausgebildet, dass er die Saugwirkung und die laminare Luftströmung unterstützt. Der annähernd vertikale Kanal 2.3 schliesst unmittelbar in einem annähernd rechten Winkel ϕ (vgl. Figur 5) an den horizontalen Kanal 2.2 an und dient dem Umlenken des Schnittgutstromes auf die mechanische Wurfvorrichtung. Durch das erfindungswesentliche Umlenken, werden feste Gegenstände wie Steine und andere harte Gegenstände abgebremst, welche das Messerrad ins Innere des Böschungsmähkopfes schleudert. Am Ende des horizontalen Kanals, beim Übergang in den vertikalen Kanal, ist zusätzlich eine Bremsvorrichtung für die anfliegenden festen Gegenstände vorgesehen. Diese besteht hier vorzugsweise aus entsprechend ausgebildeten Leitblechen 15 aus Kunststoff oder Gummi.

Der Schnittgutstrom trifft am unteren Ende des vertikalverlaufenden Kanals 2.3 mit einer relativ hohen Geschwindigkeit auf das, als mechanische Wurfvorrichtung ausgebildete, Förderband 4. Die Anordnung des Förderbandes 4 ist dabei so gewählt, dass die oben liegende Transportfläche im wesentlichen horizontal und senkrecht zum auftreffenden Schnittgutstrom liegt. Dadurch erreicht man, dass die Luft, welche sich im Schnittgutstrom befindet, umgelenkt wird, das Schnittgut aber sich infolge seiner Trägheit auf der Oberfläche des Förderbandes 4 sammelt und von der umgelenkten Luftmasse abgeschieden und konzentriert wird. Erfindungswichtig ist, dass das Schnittgut und die mitgeführte Luft mindestens teilweise getrennt aus dem Gehäuse 2 entweichen.

Die Oberseite des Förderbandes 4, welche das Schnittgut aufnimmt, wird durch Rollen unterstützt und getragen. Es können anstelle der Rollen auch Gleitflächen als Unterlage vorgesehen werden. Erfindungswichtig ist aber die elastische Bettung der das Schnittgut aufnehmenden Fläche des Förderbandes. Dies ist wichtig, da sonst die durch das Messerrad ins innere geschleuderten Steine mit unverminderter Wucht auf die Transportfläche auftreffen und diese und das Förderband 4 beschädigen.

Über die einstellbare Transportgeschwindigkeit des Förderbandes 4, kann das Schnittgut kontrolliert aus dem Böschungsmähkopf geworfen und innerhalb eines Ablagerungsbereichs zur gewünschten Humusbildung deponiert werden.

Um das Ablegen des Schnittgutes auf dem Förderband 4 zu unterstützen, kann dieses auch als Gitter oder Netz ausgebildet sein, wodurch eine Winddurchlässigkeit erreicht wird, Diese Transparenz für die Luftströmung unterstützt das Abscheiden des Schnittgutes aus dem Schnittgutstrom, indem die Luft durch das Netz entweichen kann, das Schnittgut aber an diesem hängen bleibt.

Das Förderband 4 ist vorteilhafterweise mit hervorstehenden Querrippen 8 versehen, welche die Förderwirkung verbessern.

Im Übergangsbereich von den Gehäuseteilen 2.2 und 2.3 und dem Förderband 4 sind Windleitbleche 15 vorgesehen, welche eine Bremswirkung auf den Schnittgutstrom ausüben.

Figur 3 zeigt den Böschungsmähkopf von schräg hinten. Zu erkennen sind die beiden für den Antrieb verantwortlichen Hydraulikmotoren 10 und 12 und die beiden Keilriemengetriebe 11 und 13. Der kleinere Hydraulikmotor 12 wird mittels den Hydraulikschläuchen 14 mit Öl versorgt. Das Hydrauliköl für den Betrieb der Hydraulikmotoren stammt aus dem Hydrauliksystem des Fahrzeuges, an welchem der Böschungsmäher befestigt ist. Anstelle der Hydraulikmotoren könnten auch andere, entsprechende Antriebsquellen eingesetzt werden.

Figur 4 zeigt den Böschungsmähkopf von schräg unten. Zu erkennen sind die Einlassöffnung 6 im Gehäuse 2.1. Im Innern ist das Messerrad 20 dargestellt, welches über den Hydraulikmotor 10 und das Keilriemengetriebe 11 angetrieben wird. Der gestrichelte Pfeil R (vgl. Figur 5) zeigt die Drehrichtung des Messerrades 20. Aufgrund dieser Rotation bildet sich eine Luftströmung aus, die einen Unterdruck in der Einlassöffnung 6 ausgebildet. Der Bewuchs wird dadurch in die Einlassöffnung 6 gezogen und in dieser gezielt in den Wirkbereich der Messer 23 geführt. Nachdem die Messer 23 den Bewuchs abgeschnitten haben, wird das Schnittgut entlang dem Weg S durch das Gehäuse auf das Förderband 4 geführt und abgelegt (vgl. Figur 5). Die Gehäuseteile 2.1, 2.2 und 2.3 des Böschungsmähers sind dabei so optimiert, dass das Schnittgut durch eine *minimale* Luftmenge gezielt auf das Förderband geleitet wird. Der Weg S ist durch den im Gehäuse entstehende Druckgradient definiert.

Im hinteren Bereich des Böschungsmähers ist das Förderband 4 von unten zu sehen. Die Führungsrolle 5, welche den Böschungsmähkopf 1 in einem definierten Abstand Azum Untergrund hält, ist am nachlaufenden Ende des zylindrischen Gehäuseteils 2.1 angebracht. Diese Führungsrolle 5 ist vorteilhafterweise verstellbar angeordnet, sodass der Abstand A (vgl. Figur 5) und somit die Schnitthöhe den Umständen angepasst werden kann. anstelle einer breiten Rolle können auch mehrere Walzen oder Räder montiert werden. Der vertikale Abstand A zwischen dem tiefsten Punkt der Führungsrolle 5 und dem tiefsten Punkt des Messerrades 20 entspricht der Schnitthöhe (vgl. Figur 5).

Figur 5 zeigt den Böschungsmähkopf 1 in einer seitlichen Darstellung. Der rechte Gehäuseteil ist auch hier entfernt, so dass das Innere ersichtlich ist. Zu erkennen sind das Messerrad 20 bestehend aus Achse 21, Messerhalter 22 und Messer 23. Der horizontal verlaufende Kanal 2.2 ist hier als ein Diffusor mit linear zunehmendem Querschnitt ausgebildet, was durch den Winkel ω verdeutlicht wird. Der variable Querschnitt kann selbstverständlich den geforderten Bedürfnissen und der gewünschten Wirkung angepasst werden und muss nicht zwangsläufig linear zunehmen. Das aktive Führen und Kanalisieren des im Schnittgutstrom enthaltenen Schnittgutes bedingt ein aktives Steuern der Strömungsgeschwindigkeit. Ins Innere geschleuderte feste Gegenstände wie z.B. Steine können mit mechanisch Bremsmitteln wie Blenden, Leitblechen 15 (vgl. Figur 2) und durch die erfindungswichtige, annähernd rechtwinklige Krümmung (ϕ) des Gehäuses 2 abgebremst werden. Eine Kontrolle über die Strömungsgeschwindigkeit des Schnittgutstromes wird hingegen erreicht, indem der horizontal verlaufende Kanal 2.2 als Diffusor ausgebildet ist. Selbverständlich kann auch der vertikal verlaufende Kanal 2.3 als Diffusor ausgebildet sein. Der Gehäuseabschnitt 2.2 ist hier im wesentlichen so ausgebildet, dass sein Strömungsquerschnitt stetig zunimmt, was zwangsläufig eine Verlangsamung der Strömungsgeschwindigkeit zur Folge hat, da der Volumenstrom konstant ist. So wird erreicht, dass das Schnittgut unmittelbar nach dem Verlassen des zylindrischen Rotorgehäuses 2.1 beruhigt und aktiv gebremst wird. Eine weitere Führung der Strömung wird durch zusätzliche in Strömungsrichtung oder quer dazu verlaufende Leitbleche 15 (vgl. Figur 2) und Blenden (nicht näher dargestellt) erreicht, welche die Strömung beruhigen, abbremsen und das Trennen von Schnittgut und Luft unterstützen.

Das Gehäuse 2 ist vorzugsweise aus Metallblech gefertigt. In Frage kommen insbesondere Stahl- oder Aluminiumblech. Die Blechdicke muss dabei so gewählt werden, dass die mitgeführten Steine das Gehäuse nicht beschädigen, aber dennoch der Böschungsmäher kein zu hohes Gewicht aufweist. Die Blechdicke des Gehäuses kann dabei auch variieren, oder doppelwandig ausgeführt werden, so dass in Bereichen welche nicht direkt dem Schnittgutstrom ausgesetzt sind weniger dickes oder nur einlagiges Blech zum Einsatz kommt. Der in Fahrtrichtung gesehen nachlaufende Teil des Gehäuses 2.1 oder der vorlaufende Teil des Gehäuses 2.3 werden vorteilhafterweise dünner ausgeführt.

Figur 6 zeigt eine weitere Ausführungsform, welche sich für besonders langen Bewuchs eignet. Um eine optimale Ansaugwirkung in der Einlassöffnung 6 zu erreichen, muss diese möglichst nach unten geneigt sein. Dadurch befindet sich die obere Kante 7 der Einlassöffnung 6 nahe beim Untergrund. Dies hat zur Folge, dass langes Schnittgut zu Boden gedrückt wird, was dessen Bearbeitung unter Umständen erschwert. Eine Einfördereinrichtung 30, hier vorzugsweise bestehend aus einem Kammrad 31 und einem Hydraulikmotor 32, welcher das Kammrad mit einstellbarer Geschwindigkeit antreibt, löst dieses Problem. Der Hydraulikmotor 32 wird über Hydraulikleitungen 33 mit Hydrauliköl versorgt. Durch das rotierende Kammrad 31 (Rotationsrichtung T)wird der Bewuchs 35 aktiv erfasst und in die Einlassöffnung 6 gefördert, wo er von dem dort gebildeten Unterdruck aufgestellt und in den Wirkbereich der Schneidmesser geführt wird. Durch diese Anordnung kann selbst sehr langer Bewuchs problemlos bearbeitet werden. Die Einfördereinrichtung 30 ist modular am Gehäuse 2 befestigt, so dass sie die Möglichkeit bietet, vom Gehäuse 2 gelöst zu werden. Dies wirkt sich besonders vorteilhaft aus bei Wartungsarbeiten oder bei kurzem Bewuchs, bei dem aktives Einfördern nicht erforderlich ist.

## Patentansprüche

1. Verfahren zum Mähen einer Böschung, *dadurch gekennzeichnet,* dass das Schnittgut nach dem Schneiden in einem orientierten Luftstrom kontrolliert transportiert, abgebremst und auf eine mechanische Wurfvorrichtung abgelegt wird.

2. Verfahren nach Anspruch 1, *gekennzeichnet durch* einen Unterdruck in der Einlassöffnung (6) und einen Druckgradienten im Gehäuse (2), der entlang einem vorbestimmten Weg(S) zuerst ein positives und dann ein negatives Vorzeichen aufweist, so dass sich eine Strömung ausbildet, welche im Bereich des positiven Druckgradienten turbulent ist und im Bereich des negativen Druckgradienten ausgerichtet, gelenkt, kanalisiert und abgebremst wird.

3. Verfahren nach Anspruch 2, *dadurch gekennzeichnet*, dass der Unterdruck in der Einlassöffnung (6) den Bewuchs aufstellt und gezielt in den Wirkbereich des Messerrades (20) führt.

4. Verfahren nach einem der Ansprüche 1 bis 3, *dadurch gekennzeichnet*, dass mindestens ein Diffusor mit einem in Strömungsrichtung gesehen zunehmenden Querschnitt die Luftströmung und das Schnittgut abbremst.

5. Verfahren nach einem der Ansprüche 1 bis 4, *dadurch gekennzeichnet*, dass der Luftstrom teilweise umgelenkt wird und dass sich dadurch das Schnittgut abbremst und aus diesem abscheidet.

6. Verfahren nach einem der Ansprüche 1 bis 5, *dadurch gekennzeichnet*, dass das Schnittgut beim Abscheiden aus dem Schnittgutstrom konzentriert wird.

7. Verfahren nach einem der Ansprüche 1 bis 6, *dadurch gekennzeichnet*, dass mitgeführte feste Gegenstände und das Schnittgut abgebremst werden.

8. Verfahren nach einem der Ansprüche 1 bis 7, dadurch gekennzeichnet, dass der Bewuchs aktiv erfasst und in die Einlassöffnung (6) eingefördert wird.

9. Böschungsmäher zur Durchführung des Verfahrens gemäss Anspruch 1 *dadurch gekennzeichnet*, dass eine mechanische Wurfvorrichtung (4) quer zur Fahrtrichtung (F) des Böschungsmähkopfes (1) angeordnet ist.

10. Böschungsmäher gemäss Anspruch 9, *dadurch gekennzeichnet*, dass die mechanische Wurfvorrichtung als Förderband (4) mit einstellbarer Geschwindigkeit ausgebildet ist.

11. Böschungsmäher gemäss Anspruch 10, *dadurch gekennzeichnet*, dass das Förderband (4) hervorstehende Querrippen (8) aufweist.

12. Böschungsmäher gemäss einem der Ansprüche 9 bis 11, *dadurch gekennzeichnet*, dass die mechanische Wurfvorrichtung (4) luftdurchlässig ist.

13. Böschungsmäher nach einem der Ansprüche 10 bis 12, *dadurch gekennzeichnet*, dass der tragende Teil des Förderbandes (4) auf mindestens einer Gleitfläche oder Rolle elastisch gelagert ist.

14. Böschungsmäher nach einem der Ansprüche 9 bis 13, *gekennzeichnet durch* eine, in Fahrtrichtung (F) vorlaufende, Einfördereinrichtung (30).

15. Böschungsmäher nach Anspruch 14, *dadurch gekennzeichnet*, dass diese Einfördereinrichtung (30) modular an das Gehäuse (2) befestigt ist.

16. Böschungsmäher nach einem der Ansprüche 9 bis 15, *dadurch gekennzeichnet*, dass das Gehäuse (2) eine annähernd rechtwinklige Gehäusekrümmung (ϕ) aufweist.
